# EUROPEAN PATENT SPECIFICATION

(11) **EP 2 367 436 B1**
(45) Date of publication and mention of the grant of the patent: **03.10.2012**
(21) Application number: 09760888.9
(22) Date of filing: 01.12.2009
(51) Int. Cl.: A23D 7/005, A23D 7/015, A23D 7/02

(54) **PROCESS FOR THE PREPARATION OF AN EDIBLE FAT CONTINUOUS SPREAD**
VERFAHREN ZUR HERSTELLUNG EINES ESSBAREN FETT-AUFSTRICHS
PROCÉDÉ POUR LA PRÉPARATION D'UNE PÂTE À TARTINER COMESTIBLE AVEC UNE PHASE GRASSE CONTINUE

(30) Priority: 19.12.2008 EP 08172284
(43) Date of publication of application: 28.09.2011
(73) Proprietor: Unilever NV, 3013 AL Rotterdam (NL); Unilever PLC, Blackfriars London Greater London EC4Y 0DY (GB)
(72) Inventor: DOBENESQUE, Marie, Nicole, NL-3133 AT Vlaardingen (NL); LEENHOUTS, Abraham, NL-3133 AT Vlaardingen (NL)
(74) Representative: Wurfbain, Gilles L.
(86) International application number: PCT/EP2009/066095
(87) International publication number: WO 2010/069747

(56) References cited:
- EP-A2- 1 285 584
- WO-A2-2006/087091
- JP-A- 2 299 544
- US-A1- 2006 280 855

## Description

### Field of the invention

The present invention relates to a process for the preparation of an edible fat continuous spread comprising non-gelling protein and up to 40 wt% spread.

### Background of the invention

Fat continuous food products are well known in the art and include for example shortenings comprising a fat phase and water in oil spreads like margarine comprising a fat phase and an aqueous phase.

The fat phase of margarine and similar edible fat continuous spreads is often a mixture of liquid oil (i.e. fat that is liquid at ambient temperature) and fat which is solid at ambient temperatures. The solid fat, also called structuring fat or hardstock fat, serves to structure the fat phase (being the case in for example a shortening as well as in a water in oil emulsion) and helps to stabilize the aqueous phase, if present, by forming a fat crystal network. For a margarine or spread, ideally the structuring fat has such properties that it melts or dissolves at mouth temperature. Otherwise the product may have a heavy and/or waxy mouthfeel.

Important aspects of a fat continuous spread like for example margarine and low fat spread, the low fat spread usually comprising from 10 to 40 wt% fat on total composition, are for example hardness, spreadability and ability to withstand temperature cycling. Temperature cycling means that the product is subjected to low and high temperatures (e.g. when the consumer takes the product out of the refrigerator and leaves it for some time at the table to use it). This may have a negative influence on the structure of the spread (like for example destabilization of the emulsion or oil-exudation).

Generally edible fat continuous food products like shortenings and margarines and similar edible fat continuous spreads are prepared according to prior art processes that encompass the following steps:
1. Mixing of the liquid oil, the structuring fat and if present the aqueous phase at a temperature at which the structuring fat is definitely liquid;
2. cooling of the mixture under high shear to induce crystallization of the structuring fat to create an emulsion;
3. formation of a fat crystal network to stabilize the resulting emulsion and give the product some degree of firmness;
4. modification of the crystal network to produce the desired firmness, confer plasticity and reduce the water droplet size.

These steps are usually conducted in a process that involves apparatus that allow heating, cooling and mechanical working of the ingredients, such as the churn process or the votator process. The churn process and the votator process are described in the Ullmans Encyclopedia, Fifth Edition, Volume A 16, pages 156-158.

A disadvantage of the known processes is that the choice of fats that can practically be used as structuring agent is rather limited. If the melting point of the structuring agent is too high the melting properties in the mouth are unsatisfactory. If on the other hand, the melting point is too low, the emulsion stability will be negatively affected. Moreover the amount of saturated fatty acids (SAFA) in the structuring agent is usually relatively high. Also trans fatty acid may be present. Some experts have called for reductions in these fatty acids to improve cardiovascular health.

Some consumers prefer spreads that have a low energy density (for example products that are low in total fat) and/or are low in SAFA but still have a good nutritional profile (by providing for example essential fatty acids like omega-3 and omega-6).

Thus there is a clear need for edible fat continuous spread with low fat content like for example 40 wt% or less.

Non-gelling protein, like for example dairy protein, is known to enhance the taste perception of spreads. However, fat continuous spreads, and especially low fat spreads, comprising non-gelling protein are much more difficult to make.

This is caused by the behaviour of non-gelling protein being an oil in water emulsion promoting agent. The non-gelling protein thus (partly) inhibits the forming of a stable water in oil emulsion.

EP 1 285 584 discloses a process for the preparation of an edible fat continuous spread, comprising an aqueous phase with 0.04 wt% casein and 66 wt% oil, from fat powder and rapeseed oil.

A common way to make low fat spreads comprising non-gelling protein like dairy protein is to use an aqueous phase that comprises gelling and/or thickening agents like for example starch and gelatine.

EP 327 225 discloses a process for making low fat spreads comprising milk protein that uses an aqueous phase with increased viscosity.

Gelling and thickening agents are relatively expensive ingredients. Furthermore, gelatine, being a preferred thickener as it has a melting point close to mouth temperature and therefore provides spreads that disperse rapidly in the mouth thereby releasing salt and water soluble flavour components, is obtained from animal sources like pigs and bovine animals. This makes gelatine unacceptable for certain groups of consumers.

Low fat spreads comprising non-gelling protein like dairy protein that are free of gelling and thickening agents often show poor spreadibility.

It is an object of the present invention to provide edible fat continuous spreads comprising non-gelling protein that show improved spreadibility, more specifically low fat spreads.

It is another object of the present invention to provide edible fat continuous spreads comprising non-gelling protein that are free of gelling and thickening agents, more specifically low fat spreads.

### Summary of the invention

It was found that one or more of the above objects is attained by a process for the preparation of an edible fat continuous spread, comprising an aqueous phase, non-gelling protein and up to 40 wt% fat, comprising the steps of:
a. mixing fat powder and oil wherein the fat powder comprises structuring fat to provide a slurry;
b. providing an aqueous phase comprising non-gelling protein;
c. mixing the slurry and aqueous phase to form an oil continuous emulsion;
   and wherein the amount of non-gelling protein is 0,05 to 1 wt %.

### Detailed description of the invention

Weight percentage (wt%) is based on the total weight of the composition unless otherwise stated.

The terms 'fat' and 'oil' are used interchangeably. Where applicable the prefix 'liquid' or 'solid' is added to indicate if the fat or oil is liquid or solid at ambient temperature as understood by the person skilled in the art. The term 'structuring fat' refers to a fat that is solid at ambient temperature.

Ambient temperature is a temperature of about 20 degrees Celsius.

The process of the present invention uses fat powder comprising structuring fat and does not require the need to form the crystal network to make the spread by heating and cooling the whole composition. Such processes have been described previously in for example EP 1865786 A. This process is characterized in that (part of) the structuring fat is pre-crystallized and does not form from the fat phase (comprising the structuring fat and liquid oil) optionally including the aqueous phase as is the case in conventional ways of preparing a spread. One of the main advantages of this process is that it requires less energy to make.

### Fat powder

The fat powder comprises structuring fat and preferably comprises at least 80 wt% of structuring fat, more preferably at least 85 wt%, even more preferably at least 90 wt%, still more preferably at least 95 wt% and most preferably at least 98 wt%. Most preferably the edible fat powder essentially consists of structuring fat.

The structuring fat may be a single fat or a mixture of different fats. The structuring fat may be of vegetable, animal or marine origin. Preferably at least 50 wt% of the structuring fat (based on total amount of structuring fat) is of vegetable origin, more preferably at least 60 wt%, even more preferably at least 70 wt%, still more preferably at least 80 wt%, even still more preferably at least 90 wt% and even still more further preferably at least 95 wt%. Most preferably the structuring fat essentially consists of structuring fat of vegetable origin.

The structuring fat as present in the edible fat powder preferably has a solid fat content N10 from 50 to 100, N20 from 26 to 95 and N35 from 5 to 60.

The amount of fat powder used is suitably chosen such that the required structuring (i.e. stable emulsion) is obtained. It will be appreciated that the amount of fat powder depends on the amount of structuring fat in the fat powder and the desired amount of structuring fat on total product. Preferably the amount of structuring fat on total amount of product is 1 to 20 wt%, more preferably 2 to 15 wt% and even more preferably 4 to 12 wt%.

Suitable methods to prepare the fat powder include for example Super Critical Melt Micronisation (ScMM), also known as particles from gas saturated solutions (PGSS). This is a commonly known method and is for example described in J. of Supercritical Fluids 43 (2007) 181-190 and EP1651338.

The process according to the invention is especially beneficial when used with fat powders that have been prepared using an ScMM process. Preferably the fat powder in the process according to the invention is a fat powder obtainable by supercritical melt micronisation.

It is important that the fat powder is not subjected to temperatures at which the structuring fat melts as this severely reduces the ability to structure. This temperature depends on the structuring fat as used and can routinely be determined for example based on the solid fat content profile (i.e. N-lines) of the structuring fat. Preferably the fat powder, after production, has not been subjected to temperatures above 25 degrees Celsius, more preferably 15, even more preferably 10 and most preferably 5.

### Slurry

The slurry is provided by mixing fat powder and liquid oil. A suitable method to prepare a slurry is for example by mixing fat powder and liquid oil and applying vacuum de-aeration. The slurry may be prepared using standard mixing equipment common in the field of spreads making for such use, like for example obtainable from Esco-Labor.

Care must be taken to keep the temperature of the slurry equal to or below 25 degrees Celsius to prevent the crystallized structuring fat from melting and thereby at least partly loosing its ability to provide structure to the spread. However, it is allowed for the temperature of the slurry to incidentally rise above 25 degrees Celsius.

To keep the slurry in good condition, preferably the temperature of the slurry is 1 to 25 degrees Celsius, more preferably 3 to 20 and even more preferably 5 to 15.

The oil in the slurry is liquid oil and may be single oil or a mixture of different oils, and may comprise other components. Preferably at least 50 wt% of the oil (based on total amount of oil) is of vegetable origin, more preferably at least 60 wt%, even more preferably at least 70 wt%, still more preferably at least 80 wt%, even still more preferably at least 90 wt% and even still more further preferably at least 95 wt%. Most preferably the oil essentially consists of oil of vegetable origin.

### Aqueous phase

The aqueous phase comprises 0.05 to 1 wt % of non-gelling protein. Non-gelling protein specifically does not include gelling proteins like gelatine or the like.

Preferably the amount of non-gelling protein is 0.1 to 0.5 wt % more preferably 0.15 to 0.3.

Preferably the non-gelling protein comprises dairy protein, as for example can be found in milk powder, skimmed milk powder and buttermilk powder. Standard milk powder comprises about 35 wt% of dairy protein and this means that to include for example 0.5 wt% dairy protein in a spread about 1.4 wt% milk powder has to be added, of course depending on the actual amount of dairy protein present in the milk powder used.

Preferably the non-gelling protein is selected from the group consisting of milk powder, skimmed milk powder, buttermilk powder, butter serum powder, whey, whey powder concentrate, whey protein isolate, caseinate and combinations thereof.

It is also possible to provide the non-gelling protein by using milk to prepare at least part of the aqueous phase, like for example whole fat milk, low fat milk or buttermilk.

It will be appreciated that the way of preparing the aqueous phase will depend on the type of ingredients selected. If the aqueous phase is heated it has to be cooled prior to mixing the aqueous phase with the slurry to such an extent that the temperature of the mixture of slurry and aqueous phase is kept equal to or below 25 degrees Celsius. This is to prevent the pre-crystallized structuring fat as present in the slurry from melting and thereby loosing at least part of its structuring ability.

The desired temperature of the aqueous phase prior to mixing thus depends on the temperature of the slurry. For example, a slurry temperature of about 5 degrees Celsius allows for an aqueous phase having a higher temperature taking into account the relative amounts of both phases.

Preferably the aqueous phase has a temperature of 1 to 25 degrees Celsius, more preferably 3 to 20 and even more preferably 5 to 15.

The aqueous phase may comprise other ingredients like for example salt, acidifying agent or preservative. The aqueous phase may also comprise oil, for example to aid the inclusion of hydrophobic ingredients in the aqueous phase.

In a preferred embodiment the aqueous phase is free of gelling and thickening agents. Gelling and thickening agents include for example polysaccharides like starches, vegetable gums and pectin as well as gelling proteins suitable for such use like gelatine.

Preferably the edible fat continuous spread is free of gelling and thickening agents.

Preferably the edible fat continuous spread is free of polyglycerol polyricinoleate (PGPR).

### Edible fat continuous spreads

The process according to the present invention is especially suited for the preparation of low fat spreads.

Preferably the spread comprises 5 to 40 wt% fat, preferably 10 to 35 and more preferably 15 to 30.

Spreads prepared with the process according to the present invention show improved spreadability despite the fact that they have a low fat content and comprise non-gelling protein like for example dairy protein.

### Examples

### Spreadibility

Spreadibility is determined according to the following protocol.

A flexible palette knife is used to spread a small amount of the spread on to fat free paper. The spreading screen is evaluated according to standardized scaling. A score of 1 represents a homogeneous and smooth product without any defects, a 2 refers to the same product but then with small remarks as slightly inhomogeneous or some vacuoles, a 3 refers to the level where defects become almost unacceptable, like loose moisture or coarseness during spreading. A score of 4 or 5 refers to unacceptable products, where 4 refers to a product still having some spreading properties, but an unacceptable level of defects.

The spreadibility of the spreads was measured after storage for a certain period of time (period as indicated below).

### Free water

After spreading a sample of a fat spread, the stability of the emulsion after spreading is determined by using indicator paper (Wator, ref 906 10, ex Machery-Nagel, DE) which develops dark spots where free water is adsorbed.

A stable product does not release any water and the paper does not change. Very unstable products release free water easily and this is indicated by dark spots on the paper.

A six point scale is used to quantify the quality of fat spread (DIN 10 311):
- 0 (zero) is a very stable and good product;
- 1 (one) is showing some loose moisture (one or two spots, or the paper changes a little in color as a total);
- 2 (two) as one but more pronounced;
- 3 (three) as one but to an almost unacceptable level;
- 4 (four) indicator paper is almost fully changing into a darker color;
- 5 (five) the paper changes completely and very fast into the maximum level of color intensity.

Spreads with a score of 4 or 5 are rejected for their stability. Spreads with a score of 0 or 1 show an acceptable quality with respect to free water.

### Water droplet size distribution of spreads (D3,3 measurement)

The normal terminology for Nuclear Magnetic Resonance (NMR) is used throughout this method. On the basis of this method the parameters D3,3 and exp(σ) of a lognormal water droplet size distribution can be determined. The D3,3 is the volume weighted mean droplet diameter and σ is the standard deviation of the logarithm of the droplet diameter.

The NMR signal (echo height) of the protons of the water in a water -in-oil emulsion are measured using a sequence of 4 radio frequency pulses in the presence (echo height E) and absence (echo height E*) of two magnetic field gradient pulses as a function of the gradient power. The oil protons are suppressed in the first part of the sequence by a relaxation filter. The ratio (R=E/E*) reflects the extent of restriction of the translational mobility of the water molecules in the water droplets and thereby is a measure of the water droplet size. By a mathematical procedure -which uses the log-normal droplet size distribution - the parameters of the water droplet size distribution D3,3 (volume weighed geometric mean diameter) and σ (distribution width) are calculated.

A Bruker magnet with a field of 0.47 Tesla (20 MHz proton frequency) with an air gap of 25 mm is used (NMR Spectrometer Bruker Minispec MQ20 Grad, ex Bruker Optik GmbH, DE).

The droplet size of the spread is measured, according to the above described procedure, of a spread stabilized at 5 degrees Celsius right after production for a certain period. This gives the D3,3 after stabilization at 5 degrees Celsius.

### Examples 1 to 3

Spreads with a composition as in Table 1 were made according to the method as described below.

**Table 1, Spreads composition (wt%)**

| Example | 1 | 2 | 3 |
|---|---|---|---|
| FAT SLURRY | | | |
| Sunflower oil | 26.5 | 18.7 | 17.6 |
| Fat powder (inES48) | 4.76 | 3.56 | 3.94 |
| | | | |
| AQUEOUS PHASE | | | |
| Buttermilk powder | 0.18 | 0.24 | 0.10 |
| Potassium sorbate | 0.15 | 0.11 | 0.13 |
| NaCl | 1.06 | 0.18 | 0.92 |
| Sunflower oil | 4.1 | 13.3 | 5.1 |
| Dimodan HP | - | 0.35 | - |
| Dimodan RT | 0.12 | - | 0.31 |
| Tap water | Balance 100 wt% | | |
| pH | About 5 | | |

| | | | |
|---|---|---|---|
| Dimodan® HP: molecularly distilled mono/diacylglyceride mixture derived from fully hardened palm oil (90% monoglyceride) ex Danisco DK. Dimodan RT: molecularly distilled mono/diacylglyceride mixture derived from hardened Rapeseed oil (90% monoglyceride) ex Danisco, DK Fat powder (inES48) is a fat powder of inES48 that was obtained using a supercritical melt micronisation process similar to the process described in 'Particle formation of ductile materials using the PGSS technology with supercritical carbon dioxide', P.Münüklü, Ph.D.Thesis, Delft University of Technology, 16-12-2005, Chapter 4, pp. 41-51; inES48 being an interesterified mixture of 65% dry fractionated palm oil stearin with an Iodine Value of 14 and 35% palm kernel oil. | | | |

### Slurry preparation

First about 100 kg of a slurry was made by dispersing the fat powder in cold sunflower oil of about 5 degrees Celsius, while degassing under vacuum. The oil was weighed and pre-cooled to 5 degrees Celsius in a double wall Terlet 150 liter tank equipped with a vacuum device, a jet mixer (High Speed Dissolver Disk) and an anchor mixer (Low Speed Stirrer) and cooling system (ex Terlet NV, Zutphen, NL). The powder was weighed and added to the oil via a funnel connected to the bottom inlet of the tank. The powder was sucked into the oil using vacuum. The anchor stirrer operated at 30 rotations per minute (rpm) and the jet mixer at 287 rpm. After 15 minutes the vacuum was released and the jet mixing device was stopped. After 15 minutes the slurry was pumped into the fat feed tank of the spreads production line.

### Fat feed tank

The fat feed tank was a double walled stainless steel 200 liter vessel (Terlet) equipped with a gate stirrer operating at about 60 rpm. The tank was thermo-stated at 15 degrees Celsius.

### Aqueous phase

The aqueous phase was prepared by mixing three phases (I), (II) and (III). Phase I was a mixture of a part of the total water at 75 degrees Celsius and the dry ingredients Buttermilk Powder, Potassium Sorbate and Salt prepared in the standard way. Phase (II) was a blend of Dimodan HP and a part of the sunflower oil at 75 degrees Celsius and was poured into phase (I) while using an Ultra-Turrax operating at 3000 rpm for 15 minutes, forming a finely dispersed oil in water emulsion. Then the aqueous phase III, the remaining water to balance the composition, was weighed and added to the emulsion. The emulsion was pumped into a 150 liter stainless steel double wall feed tank, thermostated at 60°C, of the spreads production line. The pH was regulated with an aqueous citric acid solution of 10 wt% to a value of about 5.

### Spreads Preparation

During spreads production the aqueous phase was first pumped through a heat exchanger, which is a double wall stainless steel pipe of 6 meters in length with an internal diameter of 22.6 mm and a total volume of 2.4 liter in combination with a static mixer of 41.5 mm in length, to obtain an outlet temperature of about 6 degrees Celsius. Initially the slurry phase was pumped into the spreads production line including the pin stirrer (volume of 0.5 liter, inner diameter 94.5 mm, rotor two rows of 4 pins and two rows of 3 pins, stator one row of 6 pins) to fill it completely. Then both phases were pumped into the system at the required ratio using two flow controlled pumps (Mohno, Wijk & Boerma, NL) via a junction point. After the junction point the mixture was pumped at about 110 kg/h into the pin stirrer, which resulted in a residence time of 16 seconds in the stirrer. The pin stirrer was thermo-stated at 8 degrees Celsius. Detailed conditions are given in Table 2.

The final product from the pin stirrer was filled in 200 ml plastic tubs and stored at 5 degrees Celsius. The analyses results are shown in Table 2.

**Table 2, Spreads Processing and Analyses**

| Example | 1 | 2 | 3 |
|---|---|---|---|
| SPREADS PROCESSING: | | | |
| Temperature fat phase (°C) | 15.5 | 15.4 | 15 |
| Pin stirrer rotor speed (rpm) | 1500 | 1500 | 2400 |
| Temperature at filling (°C) | 17.7 | 11.2 | 15.6 |

| SPREADS ANALYSES: | | | |
|---|---|---|---|
| Water droplet size D3,3 (micron) | 6.9 | 6.7 | 9.0 |
| Spreadability (1 day 5°C) | NM | NM | 1.5 |
| Spreadability (1 month 5°C) | 1.5 | 1.5 | 2.5 |

| | | | |
|---|---|---|---|
| NM - Not measured Spreadability (1 day 5°C) - measured after storage for 1 day at 5 degrees Celsius. Spreadability (1 month 5°C) - measured after storage for 1 month at 5 degrees Celsius. | | | |

### Comparative examples C-1 to C-4

Comparative samples C1-C4, with the compositions shown in Table 3, were produced according to the method described below.

**Table 3, Spreads composition (wt%)**

| Example | C-1 | C-2 | C-3 | C-4 |
|---|---|---|---|---|
| FAT PHASE: | | | | |
| Sunflower oil | 23.9 | 31.1 | 24.5 | 30.9 |
| inES48 | 3.92 | 3.50 | 2.27 | 3.85 |
| Dimodan HP | 0.1 | 0.35 | 0 | 0 |
| Dimodan RT | 0 | 0 | 0.17 | 0.15 |
| Colorant | 0.1 | 0.1 | 0.1 | 0.1 |
| | | | | |

| AQUEOUS PHASE: | | | | |
|---|---|---|---|---|
| Buttermilk powder | 0.15 | 0.24 | 0.15 | 0.15 |
| Potassium sorbate | 0.13 | 0.13 | 0.13 | 0.13 |
| NaCl | 0.90 | 0.90 | 0.90 | 0.90 |
| Tap water | Balance 100 wt% | | | |
| pH | About 5 | | | |

| | | | | |
|---|---|---|---|---|
| inES48: an interesterified mixture of 65% dry fractionated palm oil stearin with an Iodine Value of 14 and 35% palm kernel oil. | | | | |

### Spreads preparation method

Comparative examples C-1 to C-4 were produced, using a conventional process, by preparing a water in oil emulsion via a set of coolers and a pin stirrer, starting from an oil in water mixture of a separately prepared fat phase and an aqueous phase.

A clear fat phase wherein the sunflower oil, the molten inES48 and the emulsifier were mixed at 70 degrees Celsius, followed by cooling to 60 degrees Celsius, was poured into the feed tank of the spreads production line. The feed tank was a double wall stainless steel vessel with an internal diameter of 175 mm and a height of 250 mm, equipped with an agitator (two rotor blades at the conical bottom part) and one baffle of 3 by 20 cm, thermo-stated at 60 degrees Celsius.

The aqueous phase was prepared by mixing the buttermilk powder, potassium sorbate, and the NaCl, in water of 75 degrees Celsius and subsequently cooling it to 60 degrees Celsius. Then the pH was adjusted with 10 wt% aqueous citric acid solution. The completed aqueous phase was poured into the fat phase in the feed tank to obtain an oil in water (O/W) system.

The O/W mixture was pumped, using a gear pump, into a series of three Scraped Surface Heat Exchangers (called A-units) at a throughput of 8.5 kilograms per hour, using a temperature profile at the outlets of the A-units of respectively 15, 10 and 6 degrees Celsius. The A-units were stainless steel double wall tubes with an internal diameter of 30 mm. Upon cooling, fat crystals were formed, which were scraped off by two stainless steel scraper blades mounted on a rotor, the inner annulus was 3 mm, and the volume was 18.3 ml. The rotational speeds were respectively set at 1200, 1000 and 1200 rpm.

At the end of the line, after the third A-unit, a pin stirrer was used to invert the crystallised oil in water emulsion into a water in oil emulsion (W/O). The volume of the pin stirrer was 75 ml, leading to a residence time of 32 seconds; the pin stirrer was not thermostated. The outlet temperature of the pin stirrer varied between 9 and 12 degrees Celsius. Detailed conditions are given in Table 4. The final product was filled in plastic tubs of 150 ml and stored at 5 degrees Celsius. The analyses results are shown in Table 4.

**Table 4, Spreads Processing and Analyses**

| Example | C-1 | C-2 | C-3 | C-4 |
|---|---|---|---|---|
| PROCESSING: | | | | |
| Temperature ex A1 (°C) | 14.8 | 14.8 | 15.2 | 15.0 |
| Temperature ex A2 (°C) | 10.0 | 10.2 | 10.2 | 9.8 |
| Temperature ex A3 (°C) | 5.9 | 6.0 | 5.9 | 5.9 |

| PIN STIRRER: | | | | |
|---|---|---|---|---|
| Rotor speed (rpm) | 1750 | 1500 | 2400 | 1750 |
| Temperature at filling (°C) | 9.8 | 10.1 | 11.7 | 11.2 |
| | | | | |

| ANALYSES | | | | |
|---|---|---|---|---|
| Spreadability (1 week 5°C) | 4.5 | 4.5 | 5 | 4.5 |
| Free water | 5 | 5 | 5 | 5 |

| | | | | |
|---|---|---|---|---|
| Spreadability (1 week 5°C) - measured after storage for 1 week at 5 degrees Celsius. | | | | |

## Claims

1. Process for the preparation of an edible fat continuous spread, comprising an aqueous phase, non-gelling protein and up to 40 wt% fat, comprising the steps of:
a. mixing fat powder and oil wherein the fat powder comprises structuring fat to provide a slurry;
b. providing an aqueous phase comprising non-gelling protein;
c. mixing the slurry and aqueous phase to form an oil continuous emulsion; and wherein the amount of non-gelling protein is 0.05 to 1 wt%.

2. Process according to claim 1 wherein the amount of non-gelling protein is 0.1 to 0.5 wt% and more preferably 0.15 to 0.3.

3. Process according to claim 1 or 2 wherein the non-gelling protein is a dairy protein.

4. Process according to any one of claims 1 to 3 wherein the temperature of the slurry is equal to or lower than 25 degrees Celsius.

5. Process according to any one of claims 1 to 3 wherein the temperature of the slurry is 1 to 25 degrees Celsius, preferably 3 to 20 and more preferably 5 to 15.

6. Process according to any one of claims 1 to 5 wherein the aqueous phase has a temperature prior to mixing said aqueous phase with the slurry such that the mixture of slurry and aqueous phase is kept equal to or below 25 degrees Celsius.

7. Process according to any one of claim 1 to 5 wherein the aqueous phase is cooled prior to mixing to a temperature of 1 to 25 degrees Celsius, preferably 3 to 20 and more preferably 5 to 15.

8. Process according to any one of claims 1 to 7 wherein the spread comprises 5 to 40 wt% fat, preferably 10 to 35 and more preferably 15 to 30.

9. Process according to any one of claims 1 to 8 wherein the aqueous is free of gelling and thickening agents.

10. Process according to any one of claims 1 to 9 wherein the fat powder is a fat powder obtainable by supercritical melt micronisation.

## Patentansprüche

1. Verfahren zum Herstellen eines essbaren Fettaufstrichs, der eine wässrige Phase, nicht gelierendes Protein und bis zu 40 Gew.-% Fett aufweist,
das die folgenden Schritte aufweist:
a. Mischen von Fettpulver und Öl, wobei das Fettpulver ein gefügebildendes Fett aufweist, um eine Suspension bereitzustellen;
b. Bereitstellen einer wässrigen Phase, die nicht gelierendes Protein aufweist;
c. Mischen der Suspension und der wässrigen Phase, um eine kontinuierliche Ölemulsion zu erzeugen;
und wobei die Menge an nicht gelierendem Protein 0,05 bis 1 Gew.-% beträgt.

2. Verfahren nach Anspruch 1,
wobei die Menge an nicht gelierendem Protein 0,1 bis 0,5 und stärker bevorzugt 0,15 bis 0,3 Gew.-% beträgt.

3. Verfahren nach Anspruch 1 oder 2,
wobei das nicht gelierenden Protein ein Protein aus einer Molkerei ist.

4. Verfahren nach einem der Ansprüche 1 bis 3,
wobei die Temperatur der Suspension gleich oder niedriger als 25 °C ist.

5. Verfahren nach einem der Ansprüche 1 bis 3,
wobei die Temperatur der Suspension 1 bis 25, vorzugsweise 3 bis 20 und stärker bevorzugt 5 bis 15 °C beträgt.

6. Verfahren nach einem der Ansprüche 1 bis 5,
wobei die wässrige Phase vor dem Mischen der wässrigen Phase mit der Suspension eine solche Temperatur hat, dass das Gemisch von Suspension und wässriger Phase bei oder unter 25 °C gehalten wird.

7. Verfahren nach einem der Ansprüche 1 bis 5,
wobei die wässrige Phase vor dem Mischen auf eine Temperatur von 1 bis 25, vorzugsweise 3 bis 20 und stärker bevorzugt 5 bis 15 °C abgekühlt wird.

8. Verfahren nach einem der Ansprüche 1 bis 7,
wobei der Aufstrich 5 bis 40, vorzugsweise 10 bis 35 und stärker bevorzugt 15 bis 30 Gew.-% Fett aufweist.

9. Verfahren nach einem der Ansprüche 1 bis 8,
wobei der Aufstrich frei von Gelier- und Verdickungsmitteln ist.

10. Verfahren nach einem der Ansprüche 1 bis 9,
wobei das Fettpulver ein solches ist, das durch Feinstzerkleinern einer superkritischen Schmelze erhalten werden kann.

## Revendications

1. Procédé pour la préparation d'une pâte à tartiner comestible avec une phase grasse continue, comprenant une phase aqueuse, une protéine non gélifiante et jusqu'à 40 % en poids de graisse, comprenant les étapes de :
a. mélanger une graisse en poudre et de l'huile dans laquelle la graisse en poudre comprend de la graisse structurante pour donner une suspension ;
b. fournir une phase aqueuse comprenant une protéine non gélifiante ;
c. mélanger la suspension et la phase aqueuse pour former une émulsion huileuse continue et dans laquelle la quantité de protéine non gélifiante est de 0,05 à 1 % en poids.

2. Procédé selon la revendication 1, dans lequel la quantité de protéine non gélifiante est de 0,1 à 0,5 % en poids et de manière davantage préférée, de 0,15 à 0,3.

3. Procédé selon la revendication 1 ou 2, dans lequel la protéine non gélifiante est une protéine laitière.

4. Procédé selon l'une quelconque des revendications 1 à 3, dans lequel la température de la suspension est égale ou inférieure à 25 degrés Celsius.

5. Procédé selon l'une quelconque des revendications 1 à 3, dans lequel la température de la suspension est de 1 à 25 degrés Celsius, de préférence, de 3 à 20 et de manière davantage préférée, de 5 à 15.

6. Procédé selon l'une quelconque des revendications 1 à 5, dans lequel la phase aqueuse a une température avant le mélange de ladite phase aqueuse avec la suspension telle que le mélange de la suspension et de la phase aqueuse soit maintenu à un niveau inférieur ou égal à 25 degrés Celsius.

7. Procédé selon l'une quelconque des revendications 1 à 5, dans lequel la phase aqueuse est refroidie avant le mélange à une température de 1 à 25 degrés Celsius, de préférence, de 3 à 20 et de manière davantage préférée, de 5 à 15.

8. Procédé selon l'une quelconque des revendications 1 à 7, dans lequel la pâte à tartiner comprend 5 à 40 % en poids, de préférence, 10 à 35 et de manière davantage préférée, 15 à 30.

9. Procédé selon l'une quelconque des revendications 1 à 8, dans lequel la phase aqueuse est dépourvue d'agents gélifiants et épaississants.

10. Procédé selon l'une quelconque des revendications 1 à 9, dans lequel la graisse en poudre est une graisse en poudre pouvant être obtenue par micronisation par fusion supercritique.
